# EUROPEAN PATENT APPLICATION

(11) **EP 4 089 659 A1**
(43) Date of publication of application: **16.11.2022**
(21) Application number: 20917388.9
(22) Date of filing: 31.10.2020
(51) Int. Cl.: G08G 1/0969, G08G 1/0967

(54) **MAP UPDATING METHOD, APPARATUS AND DEVICE**

(30) Priority: 04.02.2020 CN 202010079832
(71) Applicant: Huawei Technologies Co., Ltd., Shenzhen, Guangdong 518129, (CN)
(72) Inventor: DING, Tao, Shenzhen, Guangdong 518129 (CN)
(74) Representative: Maiwald Patent- und Rechtsanwaltsgesellschaft mbH
(86) International application number: PCT/CN2020/125615
(87) International publication number: WO 2021/155685

(57) **Abstract**

A map updating method and apparatus (800), and a device (900) are disclosed, which can be used in automated driving (Automated driving), intelligent driving (Intelligent Driving), and other fields. The map updating method includes: when an abnormal scenario occurs, obtaining various types of sensing data of the abnormal scenario, calculating a minimum safety boundary based on the sensing data of the abnormal scenario; and updating a map based on the minimum safety boundary obtained through calculation. According to the map updating method, a map updating program can be triggered when the abnormal scenario occurs, without the need to wait for a collection vehicle/crowd-sourcing vehicle. This improves real-time performance of map refreshing, and ensures safety of an automated driving environment.

## Description

### TECHNICAL FIELD

This application relates to the technical field of intelligent driving, and in particular, to a map updating method and apparatus, and a device.

### BACKGROUND

In recent years, smart/intelligent cars (Smart/intelligent car) have become a new trend of vehicle development, and more vehicles use a driver assistance system (Advanced Driver Assistance System) and an automated driving (Automated Driving) system. In the field of automated driving, a map used by a vehicle is one of the most important components. In a running process, an autonomous vehicle needs to know its accurate location on a road, for example, a distance from a road shoulder and a distance from a lane marking. Therefore, absolute precision of the map used by the autonomous vehicle generally needs to reach a decimeter level or even a centimeter level. In addition to high-precision coordinates, various traffic elements in traffic scenarios also need to be stored in the map, including road network data, lane markings, and traffic signs in a conventional map, and also slopes, curvatures, courses, elevations, degrees of tilt of lanes, and other data.

In more than 95% of current automated driving solutions, current road information and environment information are obtained depending on high-definition maps. If a map used by an autonomous vehicle cannot be updated in a timely manner, information on the map does not match actual road information, and it is very dangerous for automated driving. Therefore, to create a safe driving environment, it is necessary to update, in a real-time, accurate, and quick manner, maps on which autonomous vehicles depend.

### SUMMARY

This application provides a map updating method and apparatus, and a device, to improve efficiency of map refreshing, ensure safety of an automated driving environment, save computing power, and reduce refreshing costs.

A first aspect of this application provides a map updating method. The method includes: when an abnormal scenario occurs, obtaining sensing data of the abnormal scenario, and calculating a minimum safety boundary based on the sensing data of the abnormal scenario, where the minimum safety boundary is for identifying, on a map, a minimum influence range of the abnormal scenario on traffic; and updating the map based on the minimum safety boundary obtained through calculation. In the foregoing method, when the abnormal scenario occurs, a map updating program is triggered, the minimum safety boundary is determined based on the sensing data of the abnormal scenario, and the map is updated based on the calculated minimum safety boundary. This improves real-time performance of map refreshing, and ensures safety of an automated driving environment.

In a possible implementation, the calculating a minimum safety boundary based on the sensing data of the abnormal scenario includes: obtaining a vehicle drivable area based on the sensing data of the abnormal scenario, and then calculating the minimum safety boundary in the abnormal scenario on the map based on the vehicle drivable area, where the vehicle drivable area is a vehicle safe drivable area determined from a view of driving. In this application, the drivable area is first calculated, and then the minimum safety boundary is calculated based on the drivable area. This improves accuracy of a calculation result.

In another possible implementation, the sensing data of the abnormal scenario includes sensing data of an in-vehicle sensor. A method for calculating the vehicle drivable area based on the sensing data of the abnormal scenario includes: inputting the sensing data of the in-vehicle sensor into a pre-trained neural network, to obtain the vehicle drivable area. The vehicle drivable area is calculated based on the sensing data of the in-vehicle sensor by applying a pre-trained neural network model. This improves a calculation speed and accuracy of a calculation result, and ensures accuracy and effectiveness of the map.

In another possible implementation, the method for calculating the vehicle drivable area includes: inputting a plurality of types of sensing data obtained by the in-vehicle sensor into a plurality of types of corresponding pre-trained neural networks respectively, to obtain a plurality of estimates of the vehicle drivable area; and fusing the plurality of estimates of the vehicle drivable area, to obtain a fused vehicle drivable area. In the present invention, drivable areas obtained by calculating multiple pieces of sensor data are fused. This improves accuracy of estimations of the vehicle drivable area, and ensures accuracy and effectiveness of map updating.

In another possible implementation, the sensing data of the abnormal scenario includes the sensing data of the in-vehicle sensor and road surveillance sensing data, where the road surveillance sensing data is obtained in the following manner: determining a set of road surveillance cameras nearby based on location information of the abnormal scenario in the sensing data of the in-vehicle sensor; and obtaining road surveillance data collected by the set of road surveillance cameras before and after the abnormal scenario occurs. In this application, the road surveillance data is considered with reference to real scenarios. Locations of the road surveillance cameras are fixed, orientations of the road surveillance cameras are clear, and quality of surveillance images is increasingly improved. Therefore, the vehicle drivable area can be calculated more accurately based on the road surveillance data, and existing surveillance resources are fully invoked, so that resources are appropriately configured.

In another possible implementation, the method for calculating a vehicle drivable area based on the sensing data of the abnormal scenario includes: comparing the road surveillance data collected before the abnormal scenario occurs with the road surveillance data collected by the set of road surveillance cameras after the abnormal scenario occurs, to obtain the vehicle drivable area. An image processing method of computer vision is used to calculate the vehicle drivable area, which provides another option for calculating the vehicle drivable area.

In another possible implementation, a method for calculating the minimum safety boundary based on the vehicle drivable area includes: calculating the minimum safety boundary based on the location information of the abnormal scenario and the vehicle drivable area.

In another possible implementation, the calculating the minimum safety boundary based on the location information of the abnormal scenario and the vehicle drivable area includes: determining coordinates of the vehicle drivable area in an ego vehicle coordinate system by using the location information of the abnormal scenario as a reference point; and converting the coordinates of the vehicle drivable area into coordinates in a global coordinate system based on a mapping relationship between the ego vehicle coordinate system and the global coordinate system that is used by the map, to obtain the minimum safety boundary in the abnormal scenario. The vehicle drivable area may be directly mapped to the map based on the correspondence between the coordinate systems. The method is simple and accurate.

In another possible implementation, the method for obtaining the sensing data of the abnormal scenario includes: When detecting that the abnormal scenario occurs, the in-vehicle sensor is triggered by an in-vehicle communication apparatus, to obtain the sensing data of the abnormal scenario. When the abnormal scenario occurs, the in-vehicle communication apparatus actively triggers a map updating program after obtaining the sensing data of the abnormal scenario. This greatly improves real-time performance of system response, and ensures personal safety of passengers in an autonomous vehicle. In addition, in the active triggering method, an updated road section is specified. This greatly saves computing resources.

In another possible implementation, the sensing data of the in-vehicle sensor includes: obstacle information/point cloud information collected by an in-vehicle radar, an image and a video collected by an in-vehicle camera, and location information obtained by an in-vehicle satellite positioning receiving system. To ensure driving safety of a vehicle, the vehicle is usually equipped with a plurality of in-vehicle sensors. A combination of a plurality of types of sensor data can ensure accuracy of map updating.

In another possible implementation, the abnormal scenario includes: a traffic accident, road construction, or a vehicle breakdown. The abnormal scenario mainly refers to a case in which a road is abnormally occupied, for example, a traffic accident occurs, a vehicle on the road breaks down, or there is a construction vehicle on the road. When the abnormal scenario occurs, the in-vehicle communication apparatus is triggered to obtain the sensing data of the abnormal scenario to update the map. According to the updating method provided in the present invention, the operation of updating a map is triggered by a common vehicle. Compared with a conventional technology in which collection and map updating are performed by a map collection vehicle or a crowd-sourcing vehicle, the method in this application can be used to reduce costs of map refreshing.

According to the foregoing descriptions about the map updating method provided in this application, an abnormal vehicle obtains the sensing data of the abnormal scenario in the first time when the abnormal scenario occurs. Using the method improves a response speed of a map system to an abnormal situation, and improves the efficiency of map refreshing, in addition to specifying the updated road section and saving computing power. In addition, map updating is triggered by a common vehicle, so that a map service company does not need to send the collection vehicle or hire the crowd-sourcing vehicle for collection. This reduces map refreshing costs. In addition, the plurality of types of sensor data are introduced to calculate the vehicle drivable area. This improves accuracy of map updating.

According to a second aspect, this application provides a map updating apparatus, where the updating apparatus includes an obtaining module, a processing module, and an updating module.

The obtaining module is configured to obtain sensing data of an abnormal scenario. The processing module is configured to calculate a minimum safety boundary in the abnormal scenario based on the sensing data of the abnormal scenario, where the minimum safety boundary is for identifying, on a map, a minimum influence range of the abnormal scenario on traffic. The updating module is configured to update the map based on the minimum safety boundary obtained through calculation.

In a possible implementation, the processing module is configured to: obtain a vehicle drivable area in the abnormal scenario based on the sensing data of the abnormal scenario, where the vehicle drivable area is a vehicle safe drivable area determined from a view of driving; and calculate the minimum safety boundary in the abnormal scenario based on the obtained vehicle drivable area.

In another possible implementation, the sensing data of the abnormal scenario includes sensing data of an in-vehicle sensor, and the processing module is specifically configured to input the sensing data of the in-vehicle sensor into a pre-trained neural network, to obtain the vehicle drivable area.

In another possible implementation, the processing module is further configured to input a plurality of types of sensing data obtained by the in-vehicle sensor into a plurality of types of corresponding pre-trained neural networks respectively, to obtain a plurality of estimates of the vehicle drivable area; and fuse the plurality of estimates, to obtain a fused vehicle drivable area through calculation.

In another possible implementation, the sensing data of the abnormal scenario includes the sensing data of the in-vehicle sensor and road surveillance sensing data. The road surveillance sensing data is obtained by the obtaining module in the following manner: determining a set of road surveillance cameras near the abnormal scenario based on location information of the abnormal scenario that is included in the sensing data of the in-vehicle sensor; and obtaining the road surveillance sensing data collected by the set of road surveillance cameras, where the road surveillance sensing data includes road surveillance data collected before the abnormal scenario occurs and road surveillance data collected after the abnormal scenario occurs.

In another possible implementation, the processing module is further configured to compare the road surveillance data collected by the set of road surveillance cameras before the abnormal scenario occurs with the road surveillance data collected by the set of road surveillance cameras after the abnormal scenario occurs, to obtain the vehicle drivable area.

In another possible implementation, the processing module is further configured to calculate the minimum safety boundary in the abnormal scenario based on the location information of the abnormal scenario and the vehicle drivable area.

In another possible implementation, that the processing module calculates the minimum safety boundary based on the location of the abnormal scenario and the vehicle drivable area specifically includes: obtaining, based on the sensing data of the in-vehicle sensor, coordinates of the vehicle drivable area in an ego vehicle coordinate system by using the location information of the abnormal scenario as a reference point; and converting the coordinates of the vehicle drivable area into coordinates in a global coordinate system based on a mapping relationship between the ego vehicle coordinate system and the global coordinate system that is used by the map, to obtain the minimum safety boundary in the abnormal scenario.

In another possible implementation, the obtaining module is specifically configured to: when it is detected that the abnormal scenario occurs, obtain the sensing data of the abnormal scenario.

In another possible implementation, the sensing data of the in-vehicle sensor includes: obstacle information/point cloud information collected by an in-vehicle radar, an image and a video collected by an in-vehicle camera, and location information obtained by an in-vehicle satellite positioning receiving system.

In another possible implementation, the abnormal scenario includes: a traffic accident, road construction, or a vehicle breakdown.

Technical effects that can be achieved by the map updating apparatus and the possible implementations provided in the second aspect are the same as technical effects that can be achieved by the map updating method and the possible implementations in the first aspect. Details are not described here again.

According to a third aspect, this application provides a map updating system, specifically including an in-vehicle communication apparatus and a cloud server. The in-vehicle communication apparatus is configured to: when detecting that an abnormal scenario occurs, obtain sensing data of the abnormal scenario, and send the sensing data of the abnormal scenario to a cloud system, to trigger the cloud system to perform updating. The cloud server is configured to: calculate a minimum safety boundary based on the obtained the sensing data of the abnormal scenario, and update a map, where the minimum safety boundary is for identifying, on the map, a minimum influence range of the abnormal scenario on traffic.

According to a fourth aspect, this application provides another map updating system, specifically including an in-vehicle communication apparatus and a cloud server. The in-vehicle communication apparatus is configured to: when detecting that an abnormal scenario occurs, obtain sensing data of the abnormal scenario, calculate a minimum safety boundary based on the obtained sensing data of the abnormal scenario, where the minimum safety boundary is for identifying, on a map, a minimum influence range of the abnormal scenario on traffic, and send the minimum safety boundary to a cloud system, to trigger the cloud system to perform updating. The cloud server is configured to update the map based on the obtained minimum safety boundary.

According to a fifth aspect, this application provides an in-vehicle telecommunications box, where the in-vehicle telecommunications box includes a processor, a memory, a communication interface, and a bus. The processor, the memory, and the communication interface are connected and communicate with each other through the bus. The memory is configured to store computer-executable instructions. When the in-vehicle telecommunications box runs, the processor executes the computer-executable instructions in the memory, to perform, by using hardware resources in the in-vehicle telecommunications box, operation steps of the method implemented by the in-vehicle communication apparatus in the method according to all the foregoing aspects or any one of the possible implementations of the aspects.

According to a sixth aspect, this application provides a networked vehicle, where the networked vehicle includes an in-vehicle communication apparatus and an in-vehicle sensor. When detecting that an abnormal scenario occurs, the in-vehicle sensor obtains sensing data of the abnormal scenario, calculates a minimum safety boundary based on the sensing data of the abnormal scenario, where the minimum safety boundary is for identifying, on a map, a minimum influence range of the abnormal scenario on traffic, and sends the minimum safety boundary to a cloud system, to trigger the cloud system to update the map.

According to a seventh aspect, this application provides another networked vehicle, where the another networked vehicle includes an in-vehicle communication apparatus and an in-vehicle sensor. When detecting that an abnormal scenario occurs, the in-vehicle sensor obtains sensing data of the abnormal scenario, and sends the sensing data of the abnormal scenario to a cloud system, to trigger the cloud system to perform updating.

According to an eighth aspect, this application provides a cloud server. When an abnormal scenario occurs, the cloud server obtains sensing data of an abnormal scenario, and calculates a minimum safety boundary based on the sensing data of the abnormal scenario, to update a map.

According to a ninth aspect, this application provides a computer-readable storage medium, where the computer-readable storage medium stores instructions. When the instructions are run on a computer, the computer is enabled to perform the method according to any one of the first aspect and the possible implementations.

According to a tenth aspect, this application provides a computer program product including instructions. When the instructions are run on a computer, the computer is enabled to perform the method according to any one of the first aspect and the possible implementations.

### BRIEF DESCRIPTION OF DRAWINGS

FIG. 1A is a schematic diagram of an application scenario of an existing map updating method according to an embodiment of this application;
FIG. 1B is a schematic diagram of an application scenario of a map updating method of the present invention according to an embodiment of this application;
FIG. 2 is a logical architecture of a map updating system according to an embodiment of this application;
FIG. 3 is a flowchart of a map updating method according to an embodiment of this application;
FIG. 4 is a flowchart of another map updating method according to an embodiment of this application;
FIG. 5 is a flowchart of a method for calculating a drivable area according to an embodiment of this application;
FIG. 6 is a schematic diagram of calculating a drivable area by using a neural network according to an embodiment of this application;
FIG. 7 is a schematic diagram of performing multi-layer fusion on a plurality of types of drivable areas according to an embodiment of this application;
FIG. 8 is a flowchart of another method for calculating a drivable area according to an embodiment of this application;
FIG. 9 is a schematic diagram of a structure of a map updating apparatus according to an embodiment of this application; and
FIG. 10 is a schematic diagram of a structure of a map updating device according to an embodiment of this application.

### DESCRIPTION OF EMBODIMENTS

In the current technology, map updating products are factory-installed on a vehicle, and a computing platform can estimate information about a relative location of the vehicle in real time based on a sensor on a collection vehicle/crowd-sourcing vehicle. Road elements (such as traffic lights and street lamps) are sensed using deep learning and a SLAM (Simultaneous Localization and Mapping) algorithm. A result of real-time perception and information on a current high-definition map are compared. When a system finds that the result of real-time perception does not match the information on the map, the system reports the case to a map processing system in cloud. The cloud system processes data uploaded by the vehicle, generates map updating information, and delivers the map updating information to all vehicles to complete closure of map updating.

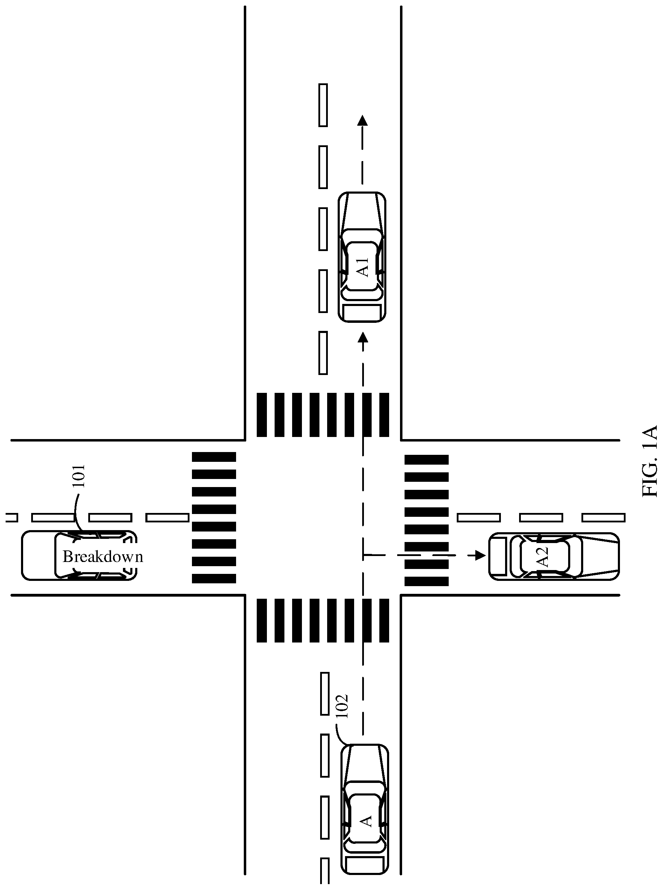

However, in the current method for updating a map using a collection vehicle/crowd-sourcing vehicle, it is difficult to quickly match a to-be-updated road section, and the map is updated only based on a preset route or depending on a random driving route of the crowd-sourcing vehicle. Consequently, real-time performance and effectiveness of the map cannot be ensured. For example, as shown in FIG. 1A, when a road is blocked because a traffic accident occurs on a vehicle 101, if a preset track of a collection vehicle/crowd-sourcing vehicle 102 (a vehicle A) is along a direction A1 or a direction A2, the map cannot be updated in time. When another autonomous vehicle is going to pass through the abnormal road section, because a map of the another autonomous vehicle cannot be updated in time, a dangerous scenario of automated driving occurs.

In addition, the collection vehicle/crowd-sourcing vehicle needs to compare a scanned scenario with an existing map in real time along the preset route or the random route. The collection vehicle/crowd-sourcing vehicle reports an anomaly to the cloud after the anomaly is detected. Such an updating method has an extremely high requirement on computing power and communication bandwidth. In addition, each collection vehicle/crowd-sourcing vehicle needs to be equipped with a set of unique sensors and processing computing units. Therefore, a quantity of collection vehicles/crowd-sourcing vehicles is very limited. It is clearly that a requirement for quick refreshing cannot be met for a large-scale high-definition map.

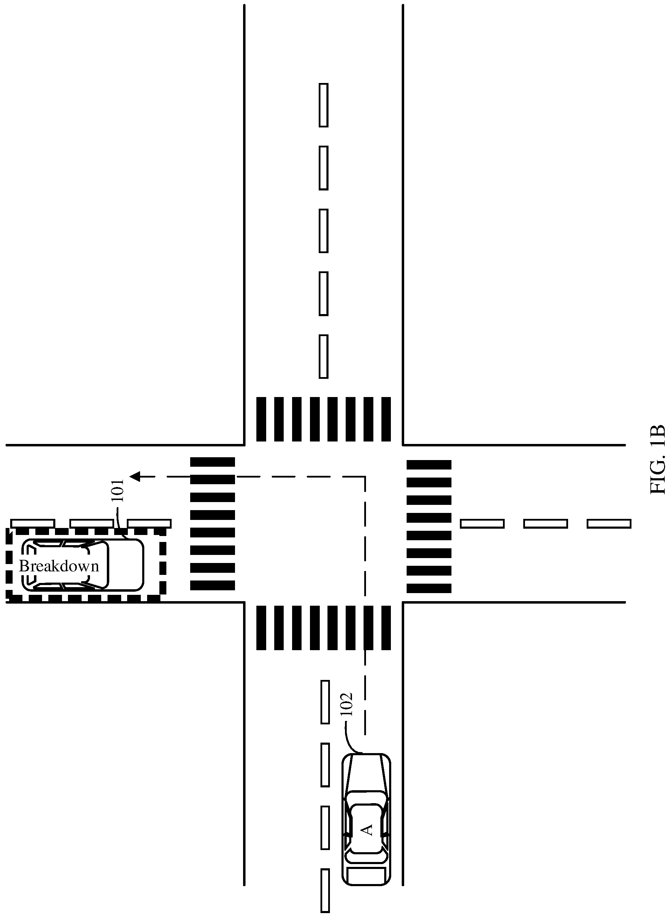

Based on this, this application provides a method for quickly updating a map. FIG. 1B shows an application scenario according to an embodiment of the present invention. The vehicle 101 on which a traffic anomaly occurs is equipped with a TBOX (Telecommunications Box), a positioning module, and another in-vehicle sensor. When an abnormal traffic scenario occurs on the road, data of the in-vehicle sensor is immediately uploaded using the TBOX. In addition, the cloud system further obtains, based on positioning information, data collected by a road camera. Based on the collected data, a minimum safety boundary (shown in a dashed-line box around the vehicle 101 in FIG. 1B) is calculated to update the high-definition map. Then, information collected by the collection vehicle/crowd-sourcing vehicle 102 on this road section is invoked to complete entire updating of the high-definition map. According to the updating method provided in the present invention, data of an abnormal scenario may be actively reported in the first time when the abnormal scenario occurs, and an emergency updating program of the cloud system is triggered. This improves a response speed of map refreshing. In addition, calculation results of a plurality of types of sensor data may be fused with each other. This improves accuracy of map updating and ensures safety of an automated driving environment.

To make the objectives, technical solutions, and advantages of embodiments of this application clearer, the following clearly and completely describes the technical solutions in embodiments of this application with reference to accompanying drawings in embodiments of this application. It is clearly that the described embodiments are merely some rather than all of embodiments of this application. All other embodiments obtained by persons of ordinary skill in the art based on embodiments of this application without creative efforts shall fall within the protection scope of this application.

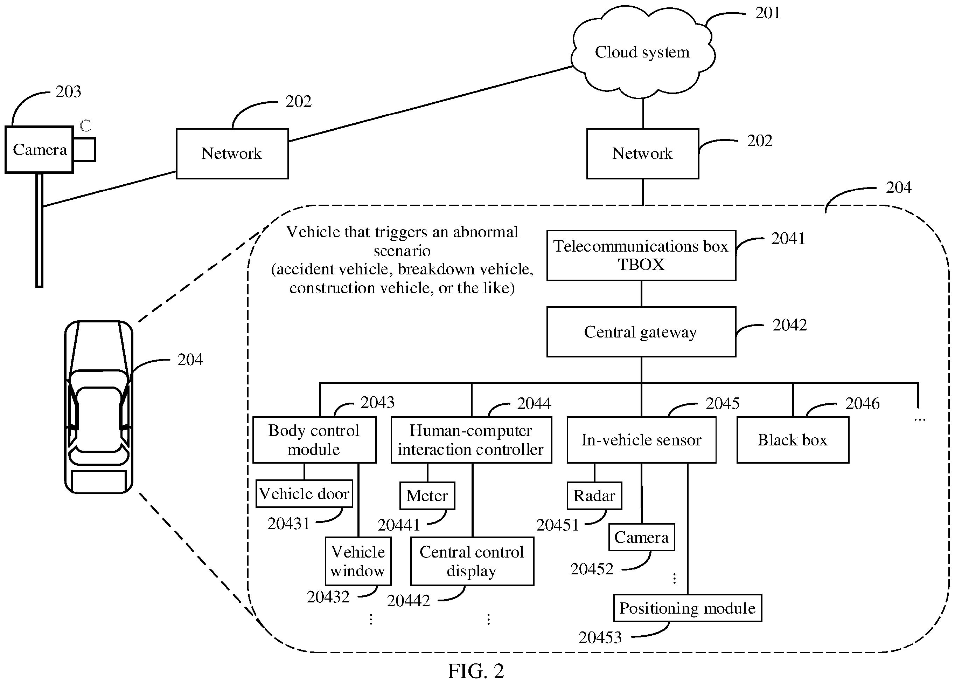

FIG. 2 is a schematic diagram of networking architecture of a map updating system according to an embodiment of this application. As shown in FIG. 2, the system includes a cloud system 201, a network 202, a road surveillance camera 203, and a vehicle 204 that triggers an abnormal scenario. The cloud system 201 communicates, via the network 202, with the road surveillance camera 203 or the vehicle 204 that triggers the abnormal scenario. The cloud system 201 can process a large amount of sensor data, calculate a minimum drivable area, then project the minimum drivable area to a map based on positioning to obtain a minimum safety boundary, and finally to update the map. The network 202 is a medium for transmitting data of an in-vehicle sensor and data of the road surveillance camera to the cloud system. The network 202 is used to transmit data in a wired and/or wireless transmission manner. The wired transmission manner includes Ethernet, optical fibers, and the like. The wireless transmission manner includes broadband cellular network transmission manners such as 3G, 4G (Fourth generation), and 5G (fifth generation).

Road surveillance cameras 203 have fixed positions, clear orientations, and are distributed on two sides of a road. The road surveillance cameras 203 have a networking function and may upload a video stream at a fixed angle of view in the abnormal scenario to the cloud to calculate the drivable area, and further update the map with the minimum safety boundary.

The vehicle 204 that triggers the abnormal scenario is an accident vehicle, a breakdown vehicle, a construction vehicle, or the like that causes an abnormal lane status. The vehicle 204 that triggers the abnormal scenario includes a telecommunications box (Telecommunications Box, TBOX) 2041, a central gateway 2042, a body control module (Body Control Module, BCM) 2043, a human-computer interaction controller 2044, an in-vehicle sensor 2045, a black box device 2046, and the like. The foregoing components or devices may communicate via a controller area network (Controller Area Network, CAN) or an in-car Ethernet (In-car Ethernet). This is not limited in this application. The telecommunications box 2041 is configured to implement communication between the vehicle 204 that triggers the abnormal scenario and the cloud system 201. The body control module 2043 is configured to control basic hardware devices of the vehicle such as a vehicle door 20431 and a vehicle window 20432. The human-computer interaction controller 2044 includes an in-vehicle infotainment control system such as in-vehicle infotainment (In-Vehicle Infotainment, IVI) and/or a hardware monitor interface (Hardware Monitor Interface, HMI). The human-computer interaction controller 2044 is responsible for supporting interaction between a person and the vehicle, and is usually configured to manage devices such as a meter 20441 and a central control display 20442. The in-vehicle sensor 2045 includes radar 20451, a camera 20452, and a positioning module 20453. Data of the in-vehicle sensor 2045 is uploaded to the cloud using the telecommunications box 2041. The radar 20451 may sense objects in a surrounding environment of the vehicle using radio signals. In some embodiments, the radar 20451 may be a lidar (Lidar), and provides point cloud information of the surrounding environment. The camera (a camera or a set of cameras) 20452 may be configured to capture a plurality of images of the surrounding environment of the vehicle. The camera 20452 may be a static camera or a video camera. For example, at least one camera (a camera or a set of cameras) 20452 may be installed on each of front and rear bumpers, a side-view mirror, and a windshield of the vehicle. The positioning module 20453 can output global positioning information with some precision using a global positioning system (Global Positioning System, GPS), a Bei Dou system, or another system. The black box device 2046 is configured to record body data of a smart car in an emergency.

Optionally, the vehicle may alternatively communicate with outside using another device in addition to the telecommunications box. Optionally, the management system shown in FIG. 2 may not include the central gateway 2042, and all the controllers and sensors may be directly connected to the telecommunications box 2041.

It should be noted that the system architecture shown in FIG. 2 is merely intended to better describe the method for updating the high-definition map provided in this application, and does not constitute any limitation on embodiments of this application.

The following describes the technical solutions in embodiments of this application with reference to the accompanying drawings in embodiments of this application.

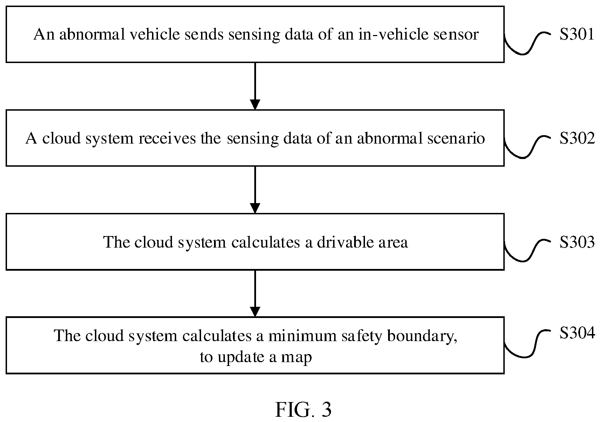

FIG. 3 is a flowchart of an overall solution according to the present invention. The method includes the following steps.

S301: An abnormal vehicle sends sensing data of an in-vehicle sensor.

When an abnormal scenario such as a traffic accident, a vehicle breakdown, or road construction occurs, a vehicle that triggers the abnormal scenario actively obtains the sensing data of the in-vehicle sensor of the vehicle, and sends the sensing data to a cloud system in the first time. The sensing data of the in-vehicle sensor mainly includes: obstacle information/point cloud information collected by a radar, images and videos collected by an in-vehicle camera (a camera or a set of cameras), and location information obtained by a global positioning system (GPS) or a BeiDou navigation system. When the anomaly occurs, the sensing data of the in-vehicle sensor is actively sent to the cloud system in the first time by the vehicle that triggers the abnormal scenario. In this method of actively triggering a map updating program, efficiency of map updating is improved, and there is no need to wait for a collection vehicle/crowd-sourcing vehicle to detect the anomaly. This ensures driving safety of the autonomous vehicle.

Optionally, the vehicle that triggers the abnormal scenario in this embodiment may be equipped with an advanced driver assistance system (ADAS) to implement an automated driving function, or may not have the automated driving function. Specifically, the vehicle may be an accident vehicle, a breakdown vehicle, or a construction vehicle.

In addition, in addition to sending the sensing data of the in-vehicle sensor to the cloud system, the abnormal vehicle also pushes alarm information to a set of autonomous vehicles that meet a preset condition, to prompt the vehicles or passengers to pay attention to information matching between information on a map and an actual road, modify a route planning policy, and reduce a vehicle's priority of passing through the abnormal road section to bypass the route. For example, the set of vehicles that meet the preset condition may be a set of autonomous vehicles within a range of 500 meters away from the abnormal scenario. This is not specifically limited in the present invention. The alarm information includes a location of the abnormal scenario, a cause of the anomaly, and estimated duration of the anomaly.

S302: The cloud system receives the sensing data of the abnormal scenario.

The sensing data of the abnormal scenario may include only the data of the in-vehicle sensor, and may further include road surveillance data determined based on location data provided by the in-vehicle sensor.

The cloud system first receives the sensing data of the in-vehicle sensor uploaded by the vehicle that triggers the abnormal scenario. The sensing data of in-vehicle sensor includes location information of the abnormal scenario, the point cloud information collected by the in-vehicle radar, and the video data collected by the in-vehicle camera.

Optionally, after receiving the location data provided by the in-vehicle sensor, the cloud system may locate a set of road surveillance cameras near the abnormal scenario, to obtain road surveillance data collected before and after the abnormal scenario occurs. The set of road cameras have fixed locations and fixed orientations. The cloud system can quickly locate the set of road surveillance cameras near the abnormal scenario based on the location information provided by the in-vehicle sensor. A relationship between road cameras and the abnormal scenario meets a preset condition. For example, the preset condition may be that a distance is less than a specific threshold, and the abnormal scenario can be photographed in the orientations of the set of cameras.

S303: The cloud system calculates a drivable area.

The cloud system calculates a minimum drivable area based on the obtained sensing data of the abnormal scenario. The drivable area is a vehicle safe drivable area on a road, which is considered from a view of driving of the vehicle. The sensing data of the abnormal scenario may come from the in-vehicle sensor, or may come from the set of road surveillance cameras. Based on different data, the cloud system may use different methods to calculate the vehicle drivable area.

S304: The cloud system calculates a minimum safety boundary to update the map.

The minimum safety boundary is considered relative to the map. For example, a range that has minimum influence on a traffic road (that is, the vehicle can access smoothly) is labeled on the map using the abnormal vehicle or a construction area is used as a reference, and a boundary of the range is the minimum safety boundary. The cloud system projects the calculated drivable area on the map based on positioning information, and calculates the minimum safety boundary to update the map.

A method for projecting the vehicle drivable area on the map is specifically as follows: First, an ego vehicle coordinate system is established using a location of the abnormal scenario as an origin of coordinates. Coordinates of the drivable area in the ego vehicle coordinate system are determined based on the data provided by the in-vehicle sensor. Then, a mapping relationship between the ego vehicle coordinate system and a global coordinate system used by the map needs to be determined. A scale or the mapping relationship between the two coordinate systems may be determined based on a distance between a fixed road element such as the surveillance camera or a road sign and the location of the abnormal scenario, and a distance between the fixed road element and the location of the abnormal scenario on the map. And then, the coordinates of the vehicle drivable area in the global coordinate system are obtained based on the mapping relationship between the two coordinate systems, to label the minimum safety boundary on the map. Optionally, when the drivable area is mapped, the cloud system further needs to perform optimization on the map in combination with road information on the high-definition map. For example, the cloud system performs blurring or regularization processing on a mapped area.

Optionally, when the map is updated, an anomaly mark further needs to be labeled at the location of the abnormal scenario, to remind passing autonomous vehicles to pay attention to information matching between information on the high-definition map and an actual road, modify a route planning policy, and reduce a vehicle's priority of passing through the abnormal road section, to bypass the route.

It should be noted that, in steps S302 to S304, the vehicle drivable area and the minimum safety boundary does not necessarily need to be calculated by the cloud system. When the abnormal vehicle is equipped with a high-performance computing center, the in-vehicle computing center may calculate the vehicle drivable area and the minimum safety boundary. Then, an in-vehicle communication apparatus uploads a calculation result of the minimum safety boundary to the cloud, and the cloud updates the map.

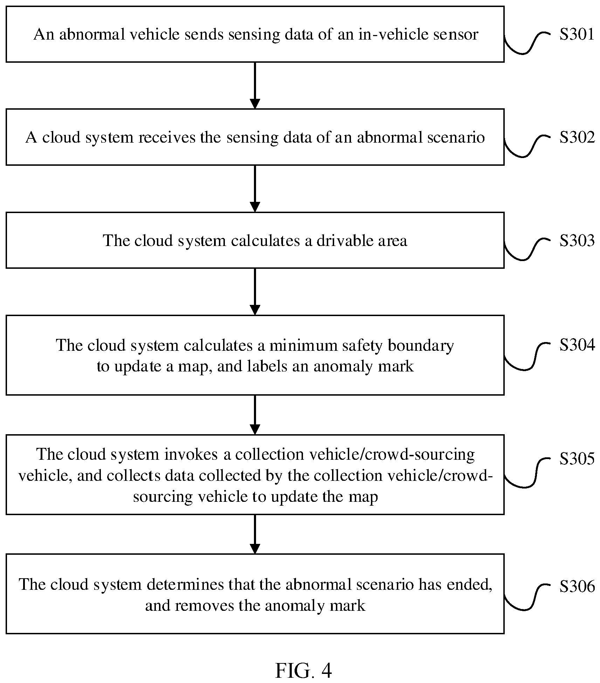

In another optional implementation, with reference to FIG. 4, after updating the map based on the minimum safety boundary, the cloud system may further perform auxiliary updating on the updated result based on data collected by the collected vehicle/crowd-sourcing vehicle.

S305: Collect the data collected by the collection vehicle/crowd-sourcing vehicle to update the map.

After the map with the minimum safety boundary is updated, the cloud system may directly collect data collected by a collection vehicle/crowd-sourcing vehicle that is about to pass through the road section in which the abnormal road scenario is located, or invoke an unoccupied collection vehicle/crowd-sourcing vehicle to collect data of the abnormal road section. The drivable area is recalculated based on the data of the collected vehicle/crowd-sourcing vehicle. After the calculated drivable area is projected to the map to calculate a new minimum safety boundary, the minimum safety boundary previously calculated based on the sensor data is updated, to update the high-definition map.

S306: Determine that the abnormal scenario has ended, and remove the anomaly mark.

When the abnormal scenario has ended, the vehicle that triggers the abnormal scenario may actively report information that the anomaly has ended. For example, after construction ends, the construction vehicle actively sends information to remind the cloud that the anomaly has ended. Optionally, the information that the anomaly has ended may alternatively be reported by the collection vehicle/crowd-sourcing vehicle to the cloud. Optionally, after confirming that anomaly information has ended, the cloud removes the previous anomaly mark on the map.

According to the map updating method provided in this embodiment of this application, the vehicle that triggers the abnormal scenario actively reports data of the anomaly, and a cloud emergency updating program of the map is started. Such an updating method greatly improves efficiency. A map refreshing operation can be completed within 1 to 5 minutes after the abnormal scenario occurs, and the map with the minimum safety boundary can be updated without the passing collection/crowd-sourcing vehicle. This reduces refreshing costs. In addition, compared with a previous real time scanning-based comparison method, the method of the present invention greatly saves computing power. In addition, the cloud system can further calculate the drivable area based on video stream data of the road surveillance obtained through positioning, in addition to the data of the in-vehicle sensor. The two minimum safety boundaries calculated by using the two methods may be fused and adjusted, improving precision of the map updating.

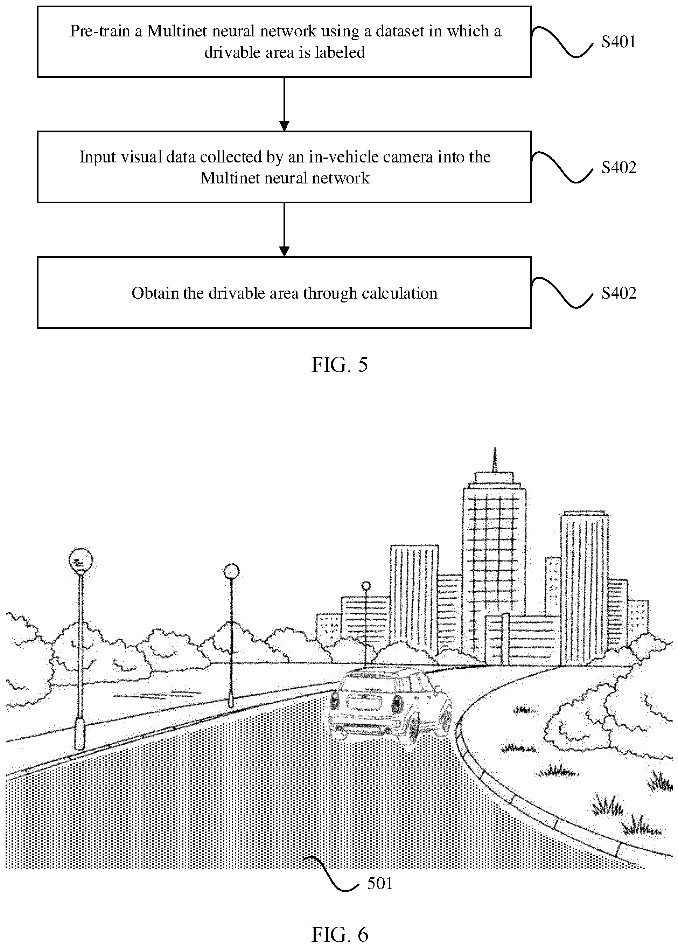

For example, based on the foregoing embodiments, with reference to FIG. 5 to 8, the drivable area in the foregoing step S303 may be calculated in the following three implementations.

Implementation 1: The cloud system calculates the drivable area based on visual data collected by the in-vehicle camera (a camera/a set of cameras). With reference to FIG. 5, steps of the foregoing method are as follows:
S401: Pre-train a Multinet network using a dataset in which a drivable area is labeled.

The Multinet, as the name implies, includes a plurality of network structures, and can perform three tasks: classification, detection, and semantic segmentation. When the network performs the three tasks, one encoder is used for feature extraction. A structure of the encoder may be VGG16, or may be another network architecture, such as GoogleNet or ResNet101. After the feature extraction is performed, three decoders are used for the three tasks: classification, detection, and semantic segmentation. A large quantity of datasets are used to train the Multinet network, and a validation set is used to verify accuracy of a model until the accuracy of the model meets a preset requirement.

S402: Input the visual data collected by the in-vehicle camera into the Multinet neural network.

S403: The neural network directly outputs image data with the drivable area.

Compared with a conventional computer image processing method, this method in which the pre-trained neural network model is used to obtain the drivable area accelerates a calculation speed, and improves calculation accuracy. FIG. 6 is a schematic diagram of identifying the drivable area using the Multinet network. An irregular area 501 filled with black dots is an area that is directly calculated by the Multinet network and through which an autonomous vehicle can safely pass, that is, the vehicle drivable area.

Implementation 2: The cloud system calculates the drivable area based on the point cloud data collected by the in-vehicle radar.

Implementation 2 is similar to Implementation 1, except that a data type is converted from two-dimensional common visual data into a three-dimensional point cloud array in Implementation 2. Point cloud is a group of 3D points and carries depth information. The point cloud may also include RGB values of all the points, which form a color point cloud. Scenario data is segmented using a point cloud neural network (for example, PointNet), so that a drivable area in a point cloud form can be obtained.

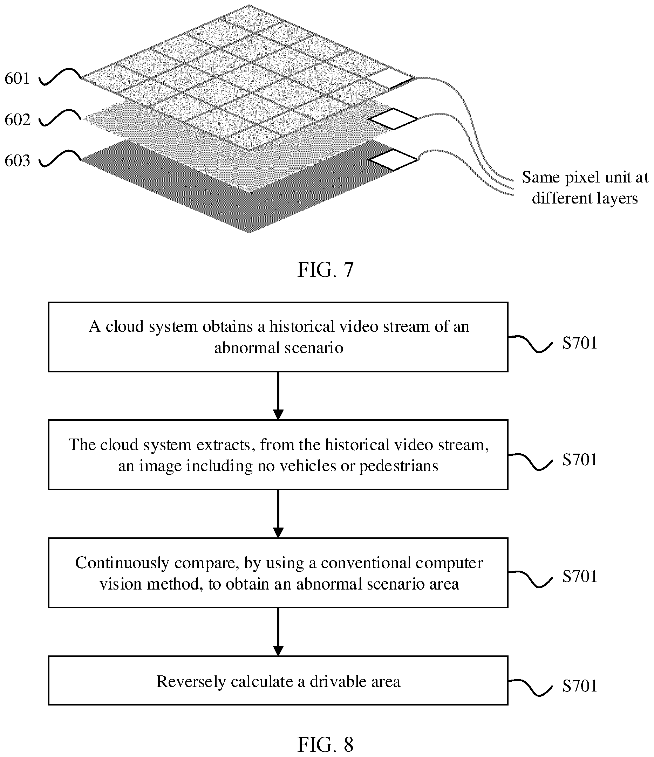

Further, when the vehicle has a plurality of sensors, results of a plurality of drivable areas may be respectively calculated based on data of the plurality of sensors, and then the results of the plurality of drivable areas are further fused to obtain a drivable area with an optimal confidence level. Although the plurality of sensors are equipped on the same vehicle, collection angles of view still have different deviations. Therefore, before fusion, the angles of view of the drivable areas need to be unified. To be specific, the drivable areas are converted into coordinates in an ego vehicle coordinate system, and then the drivable areas are fused to obtain an optimal vehicle drivable area. For example, a manner of the fusion is shown in FIG. 7. A converted drivable area picture 601, a converted point cloud drivable area picture 602, and a converted point cloud drivable area picture 603 are rasterized, where the drivable area picture 601, the point cloud drivable area picture 602, and the point cloud drivable area picture 603 are obtained through calculation based on data of the in-vehicle camera (the camera or the set of cameras), data of a lidar sensor, and data of a millimeter-wave radar sensor respectively. A size of a raster is not limited. A confidence level is generated for each raster in 601, 602, and 603 in a previous calculation process. The confidence level refers to a probability that the raster is determined as the vehicle drivable area. Three confidence levels corresponding to a same raster are proportionally summed up. If a result is greater than a preset threshold, the raster is a drivable area; otherwise, the raster is a non-drivable area. According to the foregoing method, three drivable areas in 601, 602, and 603 are fused and adjusted, to improve calculation accuracy of the vehicle drivable area.

Implementation 3: The cloud system calculates the drivable area based on the road surveillance sensing data. With reference to FIG. 8, steps of the foregoing implementations are as follows:
S701: The cloud system obtains a historical video stream of the abnormal scenario collected by the road surveillance cameras.

The cloud system locates the set of surveillance cameras near the abnormal scenario based on the location information provided by the in-vehicle sensor. Then, the cloud system may obtain a video stream and the historical video stream of the abnormal scenario from a database of a storage device, or may directly obtain the video stream and the historical video stream of the abnormal scenario from a road surveillance camera terminal. A manner of obtaining the video stream and the historical video stream of the current abnormal scenario is not limited in this embodiment of this application, and may be determined based on an actual situation.

S702: The cloud system extracts, from the historical video stream, an image including no vehicles or pedestrians.

The image including no vehicles or pedestrians indicates that there is no vehicles, pedestrians, construction, or any obstacle on a road in the image, and includes only the road. This step may be completed using an appropriate neural network, or may be completed using a conventional image processing method.

S703: Continuously compare, by using a conventional computer vision method, the image including no vehicles or pedestrians with the video stream of the abnormal scenario, to obtain an abnormal area.

S704: Reversely calculate the drivable area. Reverse calculation is performed, by using a method such as an expansion threshold, on the abnormal area obtained in step 703, to obtain the vehicle drivable area.

It should be noted that the road surveillance sensing data may be used to compare historical data with abnormal data using the conventional computer vision method, the road surveillance sensing data of the abnormal scenario may alternatively be directly input into the neural network to obtain the vehicle drivable area.

The foregoing calculated drivable area is a drivable safe area for a running vehicle. Calculating the drivable area is a premise of updating a high-definition map with a minimum safety boundary. Calculation data in Implementation 1 and Implementation 2 are both from the in-vehicle sensor, and calculation data in Implementation 3 is from the road surveillance cameras. The vehicle drivable area may be calculated based on the two types of data. Mutual auxiliary adjustment may be performed on minimum safety boundaries calculated based on the two types of drivable areas through projection, to improve accuracy of the minimum safety boundary.

According to the map updating method provided in this application, the minimum drivable area at the angle of view of the vehicle is calculated based on the data of the in-vehicle sensor uploaded by the in-vehicle communication apparatus or based on road surveillance data obtained through positioning, and then is projected to a corresponding location on the map, to refresh the map with the minimum safety boundary. In this technical solution, the vehicle that triggers the abnormal scenario actively starts a map updating program, and this greatly improves efficiency of map refreshing, where the refreshing operation performed on the high-definition map may be completed within 1 to 5 minutes when the abnormal scenario occurs. There is no need to wait for a collection vehicle/crowd-sourcing vehicle, which reduces refreshing costs. In addition, a to-be-updated road section is definite, and a requirement for ultra-large computing power and a processing time due to high-definition map updating in the cloud are reduced.

In another possible design of this application, the in-vehicle communication apparatus in this application may be a smart vehicle with a communication capability.

It should be noted that, for ease of description, the foregoing method embodiments are described as a series of actions. However, persons skilled in the art should appreciate that this application is not limited to the described sequence of the actions.

Another appropriate step combination that can be figured out by persons skilled in the art according to the content described above also falls within the protection scope of this application. In addition, persons skilled in the art should also appreciate that all embodiments described in this specification are preferred embodiments, and the related actions are not necessarily mandatory to this application.

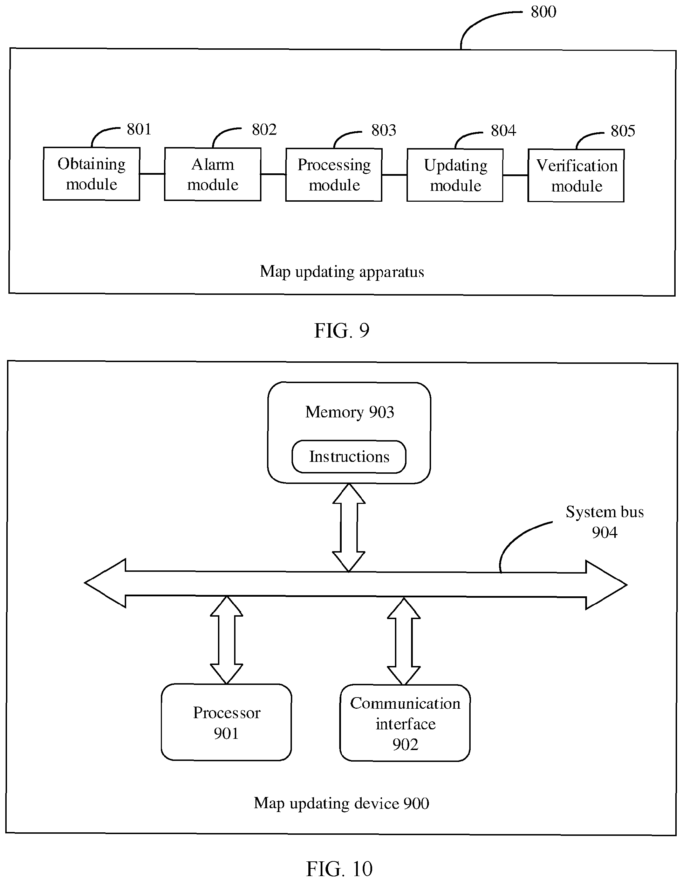

The foregoing describes in detail the map updating method provided in embodiments of this application with reference to FIG. 2 to 8. The following describes a map updating apparatus, an in-vehicle telecommunications box in this application with reference to FIG. 9 and FIG. 10. For details not disclosed in the apparatus embodiments of this application, refer to the method embodiments of this application.

FIG. 9 shows a map updating apparatus 800 according to an embodiment of this application. The updating apparatus 800 may include an obtaining module 801, an alarm module 802, a processing module 803, an updating module 804, and a verification module 805.

The obtaining module 801 is configured to obtain sensing data of an abnormal scenario when the abnormal scenario occurs.

The alarm module 802 (optional) is configured to push alarm information to a set of vehicles that meet a preset condition.

The processing module 803 is configured to calculate a minimum safety boundary in the abnormal scenario based on the obtained sensing data of the abnormal scenario, where the minimum safety boundary is for identifying, on a map, a minimum influence range of the abnormal scenario on traffic.

The updating module 804 is configured to update the map based on the minimum safety boundary obtained through calculation.

The verification module 805 (optional) is configured to: invoke or collect information collected by a collection vehicle or a crowd-sourcing vehicle on a road section in which the abnormal scenario is located, update the minimum safety boundary, and remove an anomaly mark when it is determined that an anomaly has ended.

Optionally, the processing module 803 is specifically configured to: obtain a vehicle drivable area in the abnormal scenario based on the sensing data of the abnormal scenario, where the vehicle drivable area is a vehicle safe drivable area determined from a view of driving; and calculate the minimum safety boundary in the abnormal scenario based on the vehicle drivable area.

Optionally, the sensing data of the abnormal scenario includes sensing data of an in-vehicle sensor, and the processing module 803 is further configured to input the sensing data of the in-vehicle sensor into a pre-trained neural network, to obtain the vehicle drivable area.

Optionally, the processing module 803 is further configured to input a plurality of types of obtained sensing data of the in-vehicle sensor into a plurality of types of corresponding pre-trained neural networks respectively, to obtain a plurality of estimates of the vehicle drivable area; and fuse the plurality of estimates, to obtain a fused vehicle drivable area through calculation.

Optionally, the sensing data of the abnormal scenario includes the sensing data of the in-vehicle sensor and road surveillance sensing data. A specific manner of obtaining the road surveillance sensing data by the obtaining module 801 is as follows: obtaining location information of the abnormal scenario that is included in the sensing data of the in-vehicle sensor; determining a set of road surveillance cameras near the abnormal scenario based on the location information of the abnormal scenario; and obtaining the road surveillance sensing data collected by the set of road surveillance cameras, where the road surveillance sensing data includes road surveillance data collected before the abnormal scenario occurs and road surveillance data collected after the abnormal scenario occurs.

Optionally, the processing module 803 is further configured to compare the road surveillance data collected by the set of road surveillance cameras before the abnormal scenario occurs with the road surveillance data collected by the set of road surveillance cameras after the abnormal scenario occurs, to obtain the vehicle drivable area.

Optionally, the processing module 803 is further configured to calculate the minimum safety boundary based on the location information of the abnormal scenario and the vehicle drivable area.

Optionally, that the processing module 803 calculates the minimum safety boundary in the abnormal scenario based on the location information of the abnormal scenario and the vehicle drivable area specifically includes: obtaining, based on the sensing data of the in-vehicle sensor, coordinates of the vehicle drivable area in an ego vehicle coordinate system by using the location information of the abnormal scenario as a reference point; and converting the coordinates of the vehicle drivable area into coordinates in a global coordinate system based on a mapping relationship between the ego vehicle coordinate system and the global coordinate system that is used by the map, to obtain the minimum safety boundary in the abnormal scenario.

Optionally, the obtaining module 801 is specifically configured to: when it is detected that the abnormal scenario occurs, obtain the sensing data of the abnormal scenario.

Optionally, the sensing data of the in-vehicle sensor includes: obstacle information/point cloud information collected by an in-vehicle radar, an image and a video collected by an in-vehicle camera, and location information obtained by an in-vehicle satellite positioning receiving system.

Optionally, the abnormal scenario includes: a traffic accident, road construction, or a vehicle breakdown.

In another possible embodiment, this application further provides a map updating system. The map updating system includes an in-vehicle communication apparatus and a cloud server. The in-vehicle communication apparatus is configured to: when detecting that an abnormal scenario occurs, obtain sensing data of the abnormal scenario, and send the sensing data of the abnormal scenario to a cloud system, to trigger the cloud system to perform updating. The cloud server is configured to calculate a minimum safety boundary based on the obtained sensing data of the abnormal scenario, and update a map.

In another possible embodiment, this application further provides another map updating system. The map updating system includes an in-vehicle communication apparatus and a cloud server. The in-vehicle communication apparatus is configured to: when detecting that an abnormal scenario occurs, obtain sensing data of the abnormal scenario, calculate a minimum safety boundary based on the obtained sensing data of the abnormal scenario, and send the minimum safety boundary to a cloud system, to trigger the cloud system to perform updating. The cloud server is configured to update a map based on the obtained minimum safety boundary.

In another possible embodiment, this application further provides a networked vehicle. The networked vehicle includes an in-vehicle communication apparatus and an in-vehicle sensor. When detecting that an abnormal scenario occurs, the in-vehicle sensor obtains sensing data of the abnormal scenario, calculates a minimum safety boundary in the abnormal scenario based on the sensing data of the abnormal scenario, and sends the minimum safety boundary to a cloud system, to trigger the cloud system to update a map.

In another possible embodiment, this application further provides another networked vehicle. The networked vehicle includes an in-vehicle communication apparatus and an in-vehicle sensor. When detecting that an abnormal scenario occurs, the in-vehicle sensor obtains sensing data of the abnormal scenario, and sends the sensing data of the abnormal scenario to a cloud system, to trigger the cloud system to perform updating.

It should be noted and understood that division into the modules of the foregoing apparatus is merely logic function division. In actual implementation, a part or all of modules may be integrated into one physical entity, or the modules may be physically separated. In addition, all these modules may be implemented in a form of software invoked by a processing element, or may be implemented in a form of hardware. Alternatively, a part of modules may be implemented in a form of software invoked by a processing element, and a part of modules are implemented in a form of hardware.

In an implementation process, steps in the foregoing methods or the foregoing modules may be implemented by using an integrated logical circuit of the hardware in the processing element, or by using instructions in a form of software. For example, the foregoing modules may be configured as one or more integrated circuits for implementing the foregoing methods, such as one or more application specific integrated circuits (application specific integrated circuit, ASIC), one or more digital signal processors (digital signal processor, DSP), or one or more field programmable gate arrays (field programmable gate array, FPGA). For another example, when one of the foregoing modules is implemented in a form of a program code invoked by the processing element, the processing element may be a general-purpose processor, for example, a central processing unit (central processing unit, CPU) or another processor that can invoke the program code. For another example, these modules may be integrated together and implemented in a form of a system-on-a-chip (system-on-a-chip, SOC).

All or a part of the foregoing embodiments may be implemented through software, hardware, firmware, or any combination thereof. When the software is used to implement the embodiments, all or the part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, another computer, another server, or another data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

FIG. 10 is a schematic diagram 900 of a structure of a map updating device according to an embodiment of this application. As shown in FIG. 10, the apparatus may include a processor 901, a communication interface 902, a memory 903, and a system bus 904. The memory 903 and the communication interface 902 are connected to the processor 901 through the system bus 904 for mutual communication. The memory 903 is configured to store computer-executable instructions, the communication interface 902 is configured to communicate with another device, and the processor 901 executes the computer instructions to implement the solutions shown in the foregoing method embodiments.

The system bus mentioned in FIG. 10 may be a peripheral component interconnect (peripheral component interconnect, PCI) bus, an extended industry standard architecture (extended industry standard architecture, EISA) bus, or the like. The system bus may be classified as an address bus, a data bus, a control bus, and the like. For ease of representation, only one thick line is used to represent the bus in the figure, but this does not mean that there is only one bus or only one type of bus. The communication interface is configured to implement communication between a database access apparatus and another device (such as a client, a read/write database, or a read-only database). The memory may include a random access memory (random access memory, RAM), or may further include a non-volatile memory (non-volatile memory), for example, at least one magnetic disk storage.

The processor may be a general-purpose processor, including a central processing unit CPU, a network processor (network processor, NP), or the like; or may be a digital signal processor DSP, an application specific integrated circuit ASIC, a field programmable gate array FPGA or another programmable logic device, a discrete gate or a transistor logic device, or a discrete hardware component.

Optionally, an embodiment of this application further provides a storage medium. The storage medium stores instructions. When the instructions are run on a computer, the computer is enabled to perform the method in the methods shown in the foregoing method embodiments.

Optionally, an embodiment of this application further provides a chip for running instructions. The chip is configured to perform the methods shown in the foregoing method embodiments.

It may be understood that various numbers in embodiments of this application are merely used for differentiation for ease of descriptions, and are not used to limit the scope of embodiments of this application.

It may be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A map updating method, wherein the method comprises:
obtaining sensing data of an abnormal scenario;
calculating a minimum safety boundary in the abnormal scenario based on the sensing data of the abnormal scenario, wherein the minimum safety boundary is for identifying, on a map, a minimum influence range of the abnormal scenario on traffic; and
updating the map based on the minimum safety boundary obtained through calculation.

2. The method according to claim 1, wherein the calculating a minimum safety boundary in the abnormal scenario based on the sensing data of the abnormal scenario comprises:
obtaining a vehicle drivable area in the abnormal scenario based on the sensing data of the abnormal scenario, wherein the vehicle drivable area is a vehicle safe drivable area determined from a view of driving; and
calculating the minimum safety boundary in the abnormal scenario based on the vehicle drivable area.

3. The method according to claim 2, wherein the sensing data of the abnormal scenario comprises sensing data of an in-vehicle sensor; and
the obtaining a vehicle drivable area in the abnormal scenario based on the sensing data of the abnormal scenario comprises:
inputting the sensing data of the in-vehicle sensor into a pre-trained neural network, to obtain the vehicle drivable area.

4. The method according to claim 3, wherein the inputting the sensing data of the in-vehicle sensor into a pre-trained neural network, to obtain the vehicle drivable area comprises:
inputting a plurality of types of sensing data obtained by the in-vehicle sensor into a plurality of types of corresponding pre-trained neural networks respectively, to obtain a plurality of estimates of the vehicle drivable area; and
fusing the plurality of estimates of the vehicle drivable area, to obtain a fused vehicle drivable area through calculation.

5. The method according to claim 2, wherein that the sensing data of the abnormal scenario comprises sensing data of an in-vehicle sensor and road surveillance sensing data, wherein the road surveillance sensing data is obtained in the following manner:
obtaining location information of the abnormal scenario that is comprised in the sensing data of the in-vehicle sensor;
determining a set of road surveillance cameras near the abnormal scenario based on the location information of the abnormal scenario; and
obtaining the road surveillance sensing data collected by the set of road surveillance cameras, wherein the road surveillance sensing data comprises road surveillance data collected before the abnormal scenario occurs and road surveillance data collected after the abnormal scenario occurs.

6. The method according to claim 5, wherein the calculating a vehicle drivable area in the abnormal scenario based on the sensing data of the abnormal scenario comprises:
comparing the road surveillance data collected by the set of road surveillance cameras before the abnormal scenario occurs with the road surveillance data collected by the set of road surveillance cameras after the abnormal scenario occurs, to obtain the vehicle drivable area.

7. The method according to claim 3 or 6, wherein the calculating the minimum safety boundary in the abnormal scenario based on the vehicle drivable area comprises:
calculating the minimum safety boundary in the abnormal scenario based on the location information of the abnormal scenario and the vehicle drivable area.

8. The method according to claim 7, wherein the calculating the minimum safety boundary in the abnormal scenario based on the location information of the abnormal scenario and the vehicle drivable area comprises:
obtaining, based on the sensing data of the in-vehicle sensor, coordinates of the vehicle drivable area in an ego vehicle coordinate system by using the location information of the abnormal scenario as a reference point; and
converting the coordinates of the vehicle drivable area into coordinates in a global coordinate system based on a mapping relationship between the ego vehicle coordinate system and the global coordinate system that is used by the map, to obtain the minimum safety boundary in the abnormal scenario.

9. The method according to any one of claims 1 to 8, wherein the obtaining sensing data of the abnormal scenario comprises:
when detecting that the abnormal scenario occurs, triggering, by an in-vehicle communication apparatus, the in-vehicle sensor to obtain the sensing data of the abnormal scenario.

10. The method according to any one of claims 3 to 9, wherein the sensing data of the in-vehicle sensor comprises:
obstacle information/point cloud information collected by an in-vehicle radar, an image and a video collected by an in-vehicle camera, and location information obtained by an in-vehicle satellite positioning receiving system.

11. The method according to any one of claims 1 to 10, wherein the abnormal scenario comprises: a traffic accident, road construction, or a vehicle breakdown.

12. A map updating apparatus, comprising an obtaining module, a processing module, and an updating module, wherein
the obtaining module is configured to obtain sensing data of an abnormal scenario;
the processing module is configured to calculate a minimum safety boundary in the abnormal scenario based on the sensing data of the abnormal scenario, wherein the minimum safety boundary is for identifying, on a map, a minimum influence range of the abnormal scenario on traffic; and
the updating module is configured to update the map based on the minimum safety boundary obtained through calculation.

13. The apparatus according to claim 12, wherein the processing module is specifically configured to:
obtaining a vehicle drivable area in the abnormal scenario based on the sensing data of the abnormal scenario, wherein the vehicle drivable area is a vehicle safe drivable area determined from a view of driving; and
calculate the minimum safety boundary in the abnormal scenario based on the vehicle drivable area.

14. The apparatus according to claim 13, wherein the sensing data of the abnormal scenario comprises sensing data of an in-vehicle sensor, and the processing module is further configured to input the sensing data of the in-vehicle sensor into a pre-trained neural network, to obtain the vehicle drivable area.

15. The apparatus according to claim 13, wherein the processing module is further configured to input a plurality of types of sensing data obtained by the in-vehicle sensor into a plurality of types of corresponding pre-trained neural networks respectively, to obtain a plurality of estimates of the vehicle drivable area; and fuse the plurality of estimates of the vehicle drivable area, to obtain a fused vehicle drivable area through calculation.

16. The apparatus according to claim 13, wherein the sensing data of the abnormal scenario comprises sensing data of an in-vehicle sensor and road surveillance sensing data, and the road surveillance sensing data is obtained by the obtaining module in the following manner:
obtaining location information of the abnormal scenario that is comprised in the sensing data of the in-vehicle sensor;
determining a set of road surveillance cameras near the abnormal scenario based on the location information of the abnormal scenario; and
obtaining the road surveillance sensing data collected by the set of road surveillance cameras, wherein the road surveillance sensing data comprises road surveillance data collected before the abnormal scenario occurs and road surveillance data collected after the abnormal scenario occurs.

17. The apparatus according to claim 16, wherein the processing module is further configured to compare the road surveillance data collected by the set of road surveillance cameras before the abnormal scenario occurs with the road surveillance data collected by the set of road surveillance cameras after the abnormal scenario occurs, to obtain the vehicle drivable area.

18. The apparatus according to claim 14 or 17, wherein the processing module is further configured to calculate the minimum safety boundary in the abnormal scenario based on the location information of the abnormal scenario and the vehicle drivable area.

19. The apparatus according to claim 18, wherein that the processing module calculates the minimum safety boundary in the abnormal scenario based on the location information of the abnormal scenario and the vehicle drivable area specifically comprises:
obtaining, based on the sensing data of the in-vehicle sensor, coordinates of the vehicle drivable area in an ego vehicle coordinate system by using the location information of the abnormal scenario as a reference point; and
converting the coordinates of the vehicle drivable area into coordinates in a global coordinate system based on a mapping relationship between the ego vehicle coordinate system and the global coordinate system that is used by the map, to obtain the minimum safety boundary in the abnormal scenario.

20. The apparatus according to any one of claims 12 to 19, wherein the obtaining module is specifically configured to:
when it is detected that the abnormal scenario occurs, obtain the sensing data of the abnormal scenario.

21. The apparatus according to any one of claims 14 to 20, wherein the sensing data of the in-vehicle sensor comprises:
obstacle information/point cloud information collected by an in-vehicle radar, an image and a video collected by an in-vehicle camera, and location information obtained by an in-vehicle satellite positioning receiving system.

22. The apparatus according to any one of claims 12 to 21, wherein the abnormal scenario comprises: a traffic accident, road construction, or a vehicle breakdown.

23. A map updating system, wherein the system comprises an in-vehicle communication apparatus and a cloud server, wherein
the in-vehicle communication apparatus is configured to: when detecting that an abnormal scenario occurs, obtain sensing data of the abnormal scenario, and send the sensing data of the abnormal scenario to a cloud system, to trigger the cloud system to perform updating; and
the cloud server is configured to: calculate a minimum safety boundary based on the obtained the sensing data of the abnormal scenario, and update a map, wherein the minimum safety boundary is for identifying, on the map, a minimum influence range of the abnormal scenario on traffic.

24. A map updating system, wherein the system comprises an in-vehicle communication apparatus and a cloud server, wherein
the in-vehicle communication apparatus is configured to: when detecting that an abnormal scenario occurs, obtain sensing data of the abnormal scenario, calculate a minimum safety boundary based on the obtained sensing data of the abnormal scenario, wherein the minimum safety boundary is for identifying, on a map, a minimum influence range of the abnormal scenario on traffic, and send the minimum safety boundary to a cloud system, to trigger the cloud system to perform updating; and
the cloud server is configured to update the map based on the obtained minimum safety boundary.

25. A networked vehicle, wherein the networked vehicle comprises an in-vehicle communication apparatus and an in-vehicle sensor, and when detecting that an abnormal scenario occurs, the in-vehicle sensor obtains sensing data of the abnormal scenario, and calculates a minimum safety boundary in the abnormal scenario based on the sensing data of the abnormal scenario, wherein the minimum safety boundary is for identifying, on a map, a minimum influence range of the abnormal scenario on traffic, and sends the minimum safety boundary to a cloud system, to trigger the cloud system to update the map.

26. A networked vehicle, wherein the networked vehicle comprises an in-vehicle communication apparatus and an in-vehicle sensor, and when detecting that an abnormal scenario occurs, the in-vehicle sensor obtains sensing data of the abnormal scenario, and sends the sensing data of the abnormal scenario to a cloud system, to trigger the cloud system to perform updating.
